Europäisches Patentamt

European Patent Office

Office européen des brevets

(19)

(11) **EP 1 288 702 B1**

(12) **EUROPEAN PATENT SPECIFICATION**

(45) Date of publication and mention
of the grant of the patent:
**29.12.2004 Bulletin 2004/53**

(51) Int Cl.⁷: **G02F 1/13357**, F21V 8/00

(21) Application number: **02251845.0**

(22) Date of filing: **14.03.2002**

(54) **Lighting apparatus and liquid crystal display**

Beleuchtungsvorrichtung und Flüssigkristallanzeige

Dispositif d'éclairage et dispositif d'affichage à cristaux liquides

(84) Designated Contracting States:
**DE FR GB**

(30) Priority: **31.08.2001 JP 2001263922**

(43) Date of publication of application:
**05.03.2003 Bulletin 2003/10**

(60) Divisional application:
**03016505.4 / 1 367 430**

(73) Proprietors:
• **FUJITSU LIMITED**
**Kawasaki-shi, Kanagawa 211-8588 (JP)**
• **Fujitsu Kasei Limited**
**Yokohama-shi Kanagawa 224-8505 (JP)**

(72) Inventors:
• **Maeda, Satoshi, c/o Fujitsu Limited**
**Kawasaki-shi, Kanagawa 211-8588 (JP)**

• **Aritake, Hirokazu, c/o Fujitsu Limited**
**Kawasaki-shi, Kanagawa 211-8588 (JP)**
• **Satake, Takao, c/o Fujitsu Kasei Limited**
**Yokohama-shi, Kanagawa 244-8508 (JP)**

(74) Representative: **Stebbing, Timothy Charles**
**Haseltine Lake & Co.,**
**Imperial House,**
**15-19 Kingsway**
**London WC2B 6UD (GB)**

(56) References cited:
**EP-A- 0 866 264        EP-A- 0 969 311**
**US-A- 5 664 862        US-A- 5 894 539**

• **PATENT ABSTRACTS OF JAPAN vol. 2000, no.
19, 5 June 2001 (2001-06-05) -& JP 2001 035227
A (MINEBEA CO LTD), 9 February 2001
(2001-02-09) -& US 6 293 683 B1 (OKADA
MASAFUMI) 25 September 2001 (2001-09-25)**

**Description**

The present invention relates to a lighting apparatus and a liquid crystal display, more specifically to a lighting apparatus which can provide illumination with a uniform light intensity, and a liquid crystal display using the lighting apparatus.

Liquid crystal panels, which are thin and light, are widely used as display screens of portable information terminals.

Types of such panel include transmission type liquid crystal panels and reflection type liquid crystal panels.

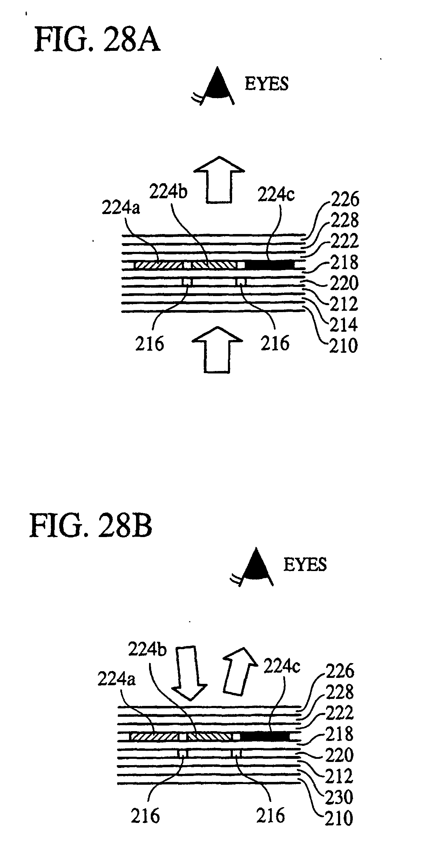

FIG. 28A is a sectional view of a transmission type liquid crystal panel. As shown in FIG. 28A, a deflector 214 is sandwiched between a glass substrate 210 and a glass substrate 212. Bus lines 216,etc. are formed on the glass substrate 212. Liquid crystal 220 is sealed between the glass substrate 212 and the glass substrate 218. Color filters 224a, 224b, 224c are sandwiched between the glass substrate 218 and the glass substrate 222. A deflector 228 is sandwiched between the glass substrate 222 and the glass substrate 226.

FIG. 28B is a sectional view of a reflection type liquid crystal panel. As shown in FIG. 28B, the reflection type panel has a mirror 230 sandwiched between a glass substrate 210 and a glass substrate 212. The mirror 230 reflects light introduced from above the upper surface of the reflection type liquid crystal panel.

Liquid crystal itself, which does not emit light, needs illumination to permit viewing of the information on a liquid crystal panel.

In the transmission type liquid crystal panel, the lighting apparatus (backlight) is disposed below the panel.

In the reflection type liquid crystal panel, when viewing the display screen in circumstances where light, such as sunlight, room lights, are present, the lighting apparatus is not essential. However, the lighting apparatus is necessary to enable the viewing also in dim light or darkness. In the reflection type liquid crystal panel, the lighting apparatus is disposed above the panel.

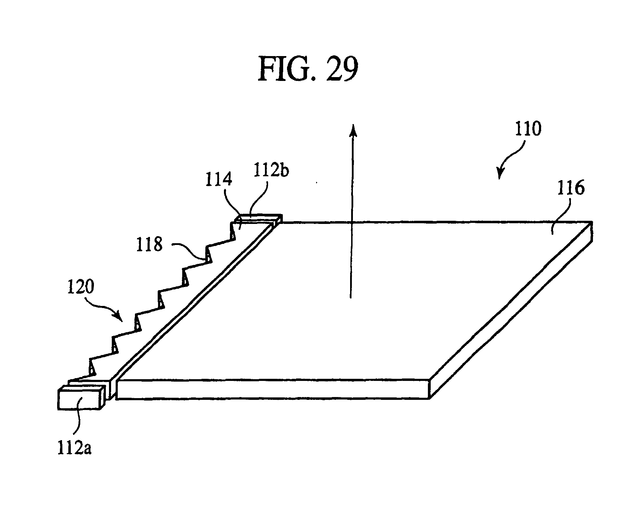

FIG. 29 is a perspective view of a proposed lighting apparatus. As shown in FIG. 29, the proposed lighting apparatus includes LEDs 112a, 112b which emit light, a linear light conductor 114 which transforms light from the LEDs 112a, 112b to linear light (linear beams) and emits the linear light, and a plane light conductor 116 which transforms the linear light from the linear light conductor 114 to plane light (a planar beam) and emits the plane light. A plurality of light reflection portions 120 are formed in stripes on the back side, i.e., the reflection side of the linear light conductor 114. A reflection coating 118 is formed on the reflection side of the linear light conductor 114.

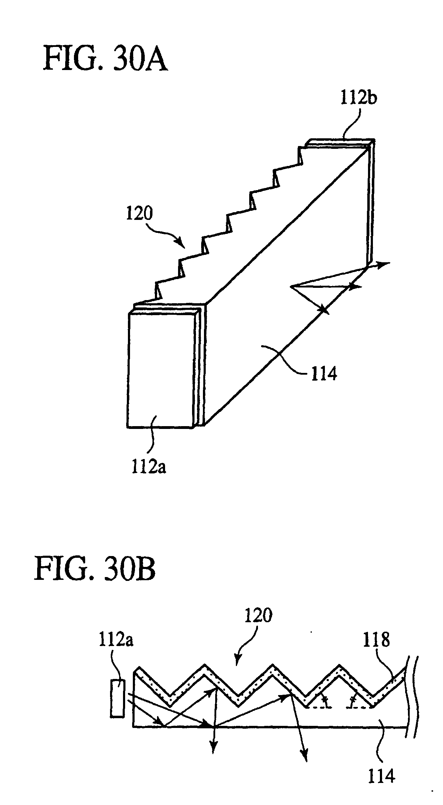

FIG. 30 is a perspective view and a plan view of the linear light conductor of the proposed lighting apparatus. As shown in FIG. 30, light emitted by the LEDs 112a, 112b is reflected on the light reflection portions 120 formed on the back side, i.e., the reflection side of the linear light conductor 114. The light linearly emitted from the emission side of the linear light conductor 114 is transformed to plane light by the plane light conductor 116 and emitted from the plane of the plane light conductor 116.

Such a proposed lighting apparatus can illuminate the liquid crystal panel in plane (all over), and is described in the specification of Japanese Patent Laid-Open Publication No. Hei 10-260405/1998.

However, the above-described proposed lighting apparatus cannot light the liquid crystal panel 108 with a uniform intensity as will be described below.

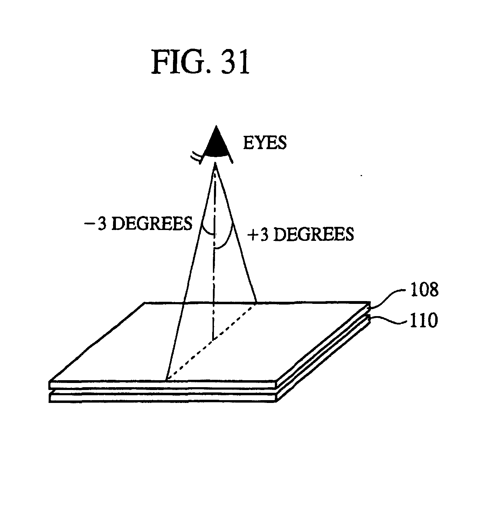

FIG. 31 is a diagrammatic view showing relationships between the human eye and the display screen. When the display screen of the liquid crystal panel 108 having a 2 inch (5.08 cm)-screen size is viewed at a 350 mm-distant position, light forming 0 degrees to the (perpendicular at the) center of the display screen arrives at the eye, and light forming ±3 degrees to both ends of the display screen reaches the eye.

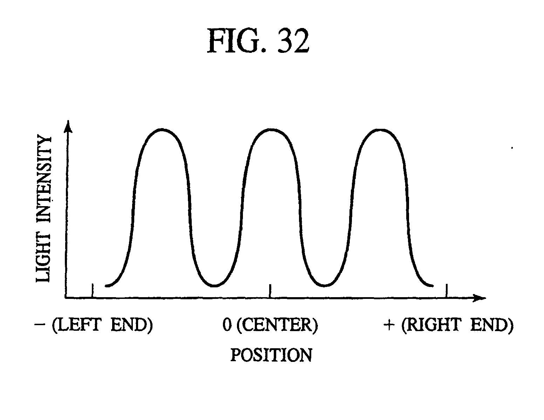

FIG. 32 is a graph of an intensity distribution of light emitted by the linear light conductor of the proposed lighting apparatus. Positions from the center of the linear light conductor 114 are shown on the horizontal axis, and light intensities are shown on the vertical axis. The intensity distribution of light which actually arrives at the human eye when the light emitted from the center of the linear light conductor 114 forms 0 degrees, and the light emitted from the ends of the linear light conductor 114 forms ±3 degrees.

As shown in FIG. 32, in the proposed lighting apparatus, the intensity distribution of light emitted from the linear light conductor 114 is not uniform and has high light intensities and low light intensities. The intensity distribution of the light emitted from the linear light conductor 114 determines the intensity distribution of the light emitted from the plane light conductor 116. The intensity distribution of the light emitted from the plane light conductor 116, therefore, is not uniform and has high light intensities and low light intensities. Accordingly, a liquid crystal display using the proposed lighting apparatus cannot have good display characteristics.

It is therefore desirable to provide a lighting apparatus (illumination apparatus or backlight) which can provide illumination with a uniform light intensity, and a liquid crystal display having good display characteristics.

EP-A-0 969 311 discloses a lighting apparatus and a liquid crystal display according to the preamble of each of the independent claims. A plurality of grooves are formed in one side of a linear light conductor. The faces of all the grooves are tilted at the same angle. A similar arrangement is disclosed in JP-A-2001/035227.

EP-A-0 866 264 discloses a liquid crystal display in which a linear light guide has a plurality of prisms formed on one surface for guiding light into a planer light guide. According to this document, each prism has the same angle of tilt in its inclined faces.

According to one aspect of the present invention, there is provided a lighting apparatus comprising a light source for emitting light, and a linear light conductor, having a reflection side and an exit side facing each other and extending in a longitudinal direction, and ends transverse to the longitudinal direction, the light source being arranged so that the light emitted by the light source is introduced into the linear light conductor through a said end of the linear light conductor, the linear light conductor reflecting the light incident on a plurality of light reflection portions formed on a reflection side, and causing the light to exit linearly from the exit side; characterised by:

planes of the plural light reflection portions being respectively tilted at different angles according to the positions in the longitudinal direction of the light reflection portions so that the exiting light is converged to a viewpoint.

According to another aspect of the present invention, there is provided a liquid crystal display comprising a lighting apparatus and a liquid crystal display panel illuminated by the lighting apparatus, the lighting apparatus including a light source for emitting light, and a linear light conductor, having a reflection side and an exit side facing each other and extending in a longitudinal direction, and ends transverse to the longitudinal direction, the light source being arranged so that the light emitted by the light source is introduced into the linear light conductor through a said end of the linear light conductor, the linear light conductor reflecting the light incident on a plurality of light reflection portions formed on a reflection side, and causing the light to exit linearly from the exit side, characterised by:

planes of the plural light reflection portions being respectively tilted at different angles according to the positions in the longitudinal direction of the light reflection portions so that the exiting light is converged to a viewpoint.

As described above, according to the present invention, angles of the light reflection portions are set so that exit angles of light exiting from the linear light conductor are required angles, whereby the lighting apparatus can have a uniform light intensity distribution. The application of the lighting apparatus can provide a liquid crystal display of good display characteristics.

Reference is made, by way of example only, to the accompanying drawings in which:

FIG. 1A is a perspective view of the lighting apparatus according to a first embodiment of the present invention.
FIG. 1B is a plan view of the lighting apparatus according to a first embodiment of the present invention.
FIGs 2A and 2B are plan views of the lighting apparatus according to the first embodiment of the present invention.
FIG. 3 is a diagrammatic view explaining relationships between the human eyes and the display screen.
FIG. 4 is a plan view taking into consideration refractive indexes, etc. in the air.
FIG. 5 is a graph of examples of tilt angles of the planes of the light reflection portions of the lighting apparatus according to the first embodiment of the present invention.
FIG. 6 is a graph of a light intensity distribution of the lighting apparatus according to the first embodiment of the present invention.
FIG. 7 is a plan view of the lighting apparatus according to a modification of the first embodiment useful for understanding the present invention.
FIG. 8 is a diagrammatic view of relationships between the human eyes and a display screen.
FIG. 9 is a graph of example of tilt angles of the planes of the light reflection portions of the lighting apparatus according to the apparatus of Fig. 7.
FIG. 10 is a plan view of the lighting apparatus according to a second embodiment of the present invention.
FIG. 11 is a graph of examples of tilt angles of the planes of the light reflection portions of the lighting apparatus according to the second embodiment of the present invention.
FIG. 12 is a plan view of the lighting apparatus according to a third embodiment of the present invention.
FIG. 13 is a graph of examples of tilt angles of the planes of the light reflection portions of the lighting apparatus according to the third embodiment of the present invention.
FIG. 14 is a graph of a light intensity distribution of the lighting apparatus according to the third embodiment of the present invention.
FIG. 15 is a plan view of the lighting apparatus according to a fourth embodiment of the present invention.
FIG. 16 is a graph of examples of tilt angles of the planes of light reflection portions of the lighting apparatus according to the fourth embodiment of the present invention.
FIG. 17 is a graph of the light intensity distribution of the lighting apparatus according to the fourth embodiment of the present invention.
FIG. 18 is a plan view of the lighting apparatus according to a fifth embodiment of the present invention.

FIG. 19 is a plan view of the lighting apparatus according to a sixth embodiment of the present invention.

FIG. 20 is a perspective view of the lighting apparatus according to a seventh embodiment of the present invention.

FIG. 21 is a plan view of the lighting apparatus according to an eighth embodiment of the present invention.

FIG. 22 is a plan view of the lighting apparatus according to a ninth embodiment of the present invention.

FIG. 23 is a perspective view of the lighting apparatus according to a tenth embodiment of the present invention.

FIG. 24 is a perspective view of the lighting apparatus according to an eleventh embodiment of the present invention.

FIG. 25 is a graph of examples of tilt angles of the planes of the light reflection portions of the lighting apparatus according to the eleventh embodiment of the present invention.

FIG. 26 is a perspective view of the liquid crystal display according to a twelfth embodiment of the present invention.

FIG. 27 is a perspective view of the liquid crystal display according to a thirteenth embodiment of the present invention.

FIG. 28A is a sectional view of a transmission-type liquid crystal panel.

FIG. 28B is a sectional view of a reflection-type liquid crystal panel.

FIG. 29 is a perspective view of the proposed lighting apparatus.

FIG. 30 is a perspective view and a plan view of the linear light conductor of the proposed lighting apparatus.

FIG. 31 is a conceptual view of relationships between the human eyes and the display screen.

FIG. 32 is a graph of the intensity distribution of light exiting from the linear light conductor of the proposed lighting apparatus.

FIG. 33 is a plan view of the proposed lighting apparatus.

[Principle of the Invention]

Before the lighting apparatus according to a first embodiment of the present invention is explained, the principle of the present invention will be explained.

The inventors of the present invention have made. studies of the reasons for the proposed lighting apparatus (backlight) being unable to illuminate a liquid crystal panel with a uniform light intensity.

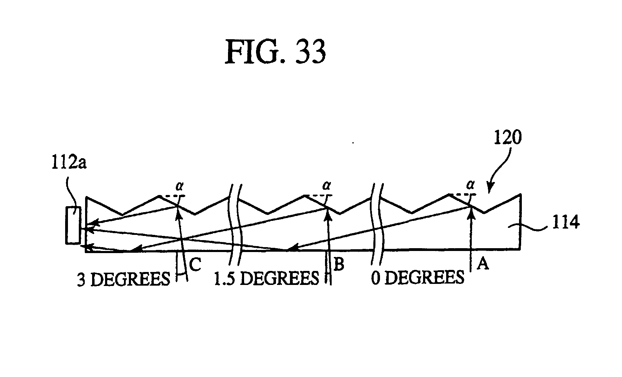

FIG. 33 is a plan view of the proposed light apparatus.

Light exiting at a 0 degrees exit angle from the planes of light reflection portions 120 formed at the position A which is the center of a linear light conductor 114 was traced back, and the traced-back rays reached substantially the center of the LED 112a.

Light exiting at, e.g., a 3 degrees exit angle from the planes of light reflection portions 120 formed at the position C which is near the left end of the linear light conductor 114 was traced back, and the traced-back rays reached substantially the center of the LED 112a. An emission angle of the traced back light was 3 degrees, because when the human eyes watch a 2 inch (5.08 cm)-liquid crystal panel at a distance of around 350 mm, the light arriving at the human eyes has an about 3 degree exit angle.

Light exiting at, e.g., a 1.5 degrees exit angle from the planes of the light reflection portions 120 formed at the position B which is intermediate between the positions A and C was traced back, and the traced-back rays reached a position offset from the center of the LED 112a.

The about 0 degrees-exit angle light exiting from the position A had its light intensity assessed, and it was found to be high. Likewise, the about 3 degrees-exit angle light exiting from the position C also had high intensity. On the other hand, the about 1.5 degrees-exit angle light exiting from the position B was found to have low intensity.

Based on the above, it has been found that when light exits at an angle as an exit angle, which permits the light to arrive at the human eye, and the source of the light given by the back-tracing reaches substantially the center of the LED, high intensity is perceived by the eye. Meanwhile, when light exits at an angle as an exit angle, which permits the light to arrive at the eye, and the source of the light given by the back-tracing is offset from the center of the LED, low intensity is perceived.

Based on the above-described studies, the inventors of the present application have had the idea that tilt angles of the light reflection portions are respectively set so that an exit angle of light rays is an angle which permits the light to arrive at a viewer's eyes, and the source of the light given by tracing back the rays reaches substantially the center of the LED, whereby the light is converged on the viewer's eyes, and a uniform light intensity distribution can be obtained.

[A First Embodiment]

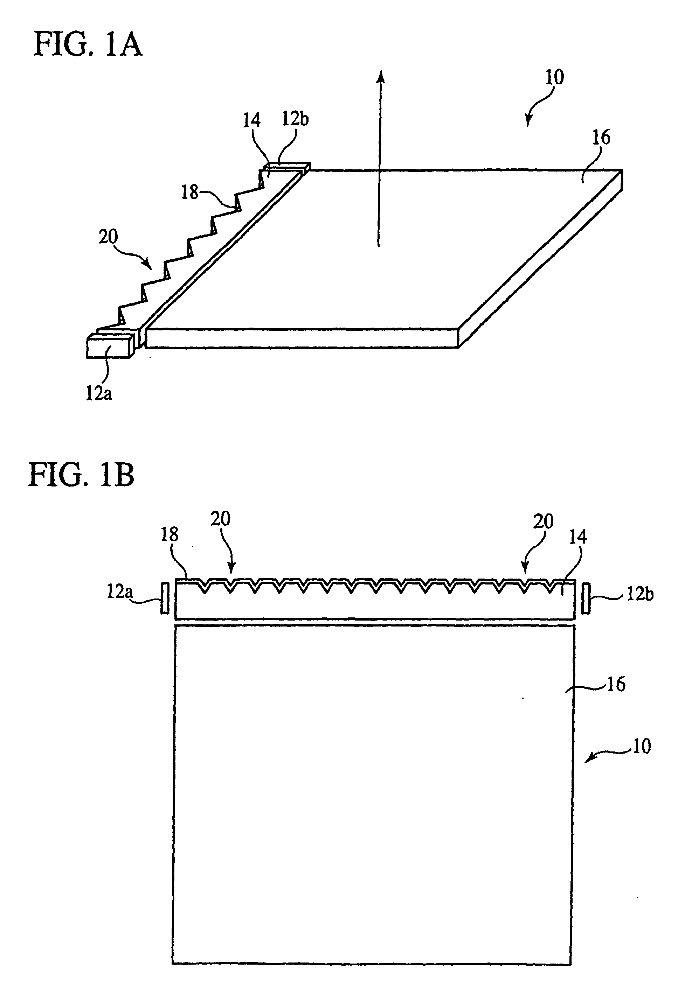

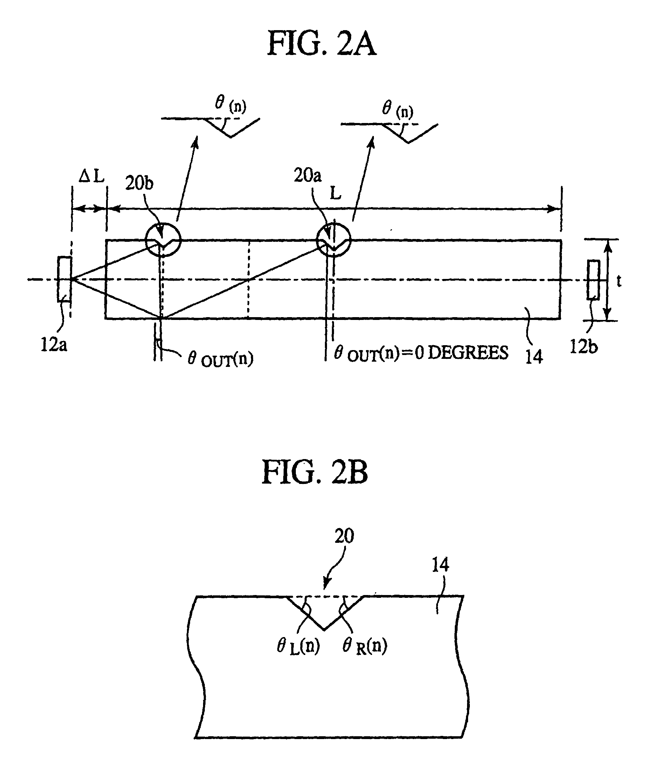

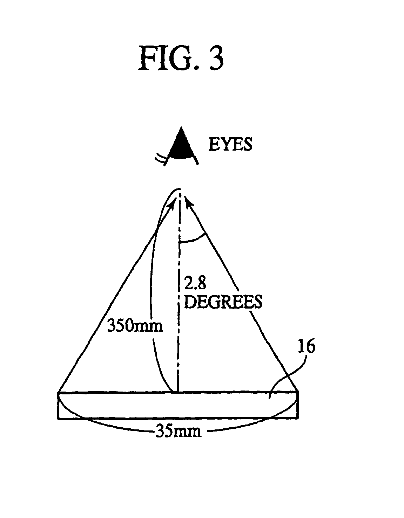

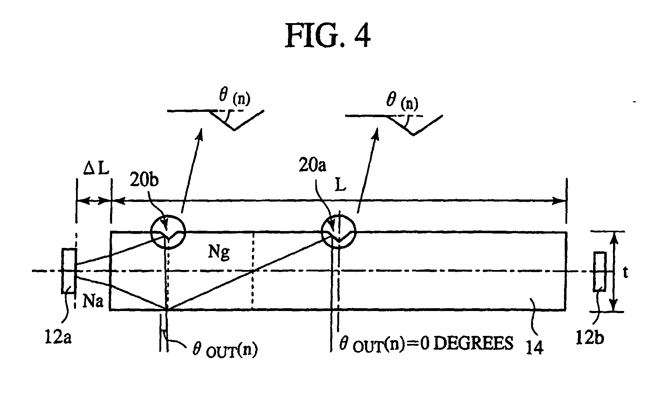

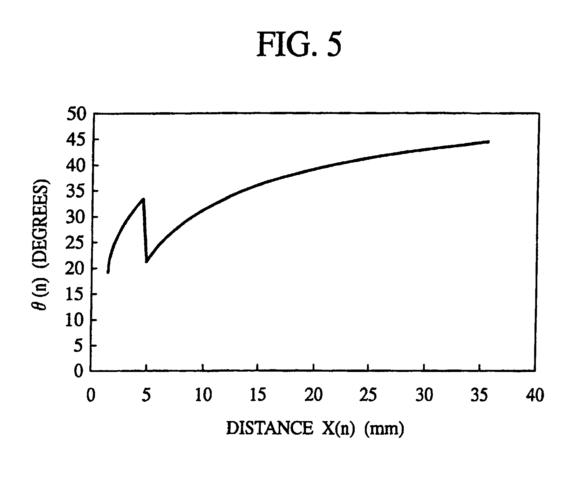

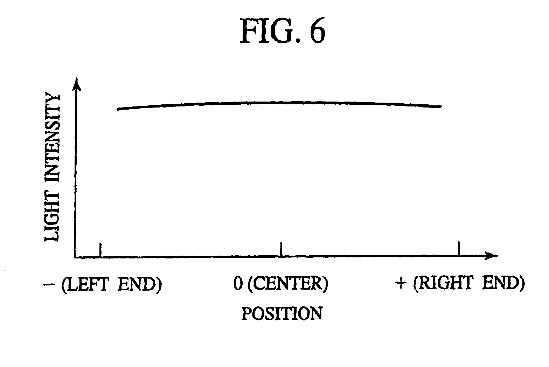

The lighting apparatus according to a first embodiment of the present invention will be explained with reference to FIGs. 1A to 6. FIG. 1A is a perspective view and FIG. 1B is a plan view of the lighting apparatus according to the present embodiment. FIG. 2 shows schematic side views revealing the constitution of the lighting apparatus: FIG. 2A is an overall side view and FIG. 2B is a partial side view showing tilt angles of light reflection portions. FIG. 3 is a diagrammatic view showing relationships between the human eyes and a display screen. FIG. 4 is a side view which takes into consideration refractive indexes, etc. in the air. FIG. 5 is a graph of examples of the tilt angles of the light reflection portions of the lighting apparatus according to the present embodiment. FIG. 6 is a graph of a light intensity distribution of the lighting apparatus according to the present embodiment.

As shown in FIGs. 1A and 1B, the lighting apparatus 10 according to the present embodiment comprises LEDs 12a, 12b which emit light, and a linear light conductor 14 which converts the light emitted by the LEDs 12a, 12b to linear light (rays oriented substantially in one direction) and emits the linear light, and a surface light conductor 16 optically coupled with the linear light conductor 14, which converts the linear light to surface light and emits the surface light. A reflection coated film (reflection coating) 18 is formed on the reflection side of the linear light conductor 14.

The LEDs 12a, 12b are disposed on both ends of the linear linear conductor 14. A distance $\Delta L$ (see FIG. 2A) between the linear linear conductor 14, and the LED 12a and the LED 12b is set to be, e.g., 0 mm (i.e. no separation).

The linear light conductor 14 is formed generally as a square pole (square-section rod). The linear light conductor 14 is made of, e.g., glass or plastics. The refractive index $N_g$ of the linear light conductor 14 is, e.g., 1.51, and its thickness t is, e.g., 3 mm. The length L of the light conductor 14 is, e.g., 37 mm for a lighting apparatus used in, e. g., a 2 inch (5.08 cm)-liquid crystal display. The display screen of the 2 inch (5.08 cm)-liquid crystal display has a width of around 35 mm. The 37 mm-length L of the linear light conductor 14 ensures a 2 mm-margin.

On the reflection side of the linear light conductor 14, a plurality of the light reflection portions 20 are formed in stripes. The light reflection portions 20 cause light to exit from the exit side of the linear light conductor 14. One hundred and fifty (150), for example, light reflection portions 20 are formed at, e.g., a 0.23 mm-pitch.

As shown in FIGs. 2A and 2B, tilt angles $\theta(n)$ of the planes of the light reflection portions 20a, 20b are set so that light can exit at required exit angles $\theta_{OUT}(n)$ corresponding to exit positions. The light reflection portions 20a, 20b are formed in large number on the reflection side of the linear light conductor 14 but are omitted in FIGs. 2A and 2B.

As shown in FIG. 3, when the 2 inch (5.08 cm)-liquid crystal panel is watched at a position distant by 350 mm, light forming 0 degrees to the center of the display screen is incident on the viewer's eyes, and light forming $\pm 2.8$ degrees to both ends of the screen is also incident on the viewer's eyes.

An exit angle $\theta_{OUT}(n)$ of light exiting the linear light conductor 14 is reflected at an exit angle at which the light exits the surface light conductor 16. For light exiting from the center of the linear light conductor 14, a tilt angle $\theta(n)$ of the planes of the light reflection portions 20 is set so that an exit angle $\theta_{OUT}(n)$ is, e.g., 0 degrees. For light exiting from positions between the center of the linear light conductor 14 and the ends thereof, tilt angles $\theta(n)$ of the planes of the light reflection portions 20 are respectively set so that exit angles $\theta_{OUT}(n)$ are respectively angles corresponding to the exit positions. For light exiting from positions near the ends of the linear light conductor 14, tilt angles $\theta(n)$ of the planes of the light reflection portions 20 are set so that exit angles $\theta_{OUT}(n)$ are, e.g., $\pm 2.8$ degrees. As a result, very good display characteristics can be obtained.

In order to set an exit angle $\theta_{OUT}(n)$ exiting the linear light conductor 14 at an angle corresponding to an exit position, a tilt angle $\theta(n)$ is given by the following formula.

As shown in FIGs. 2A and 2B, in the light reflection portions 20a, a tilt angle $\theta(n)$ of the planes of the light reflection portions 20a is set so that light totally reflected on the plane on the exit side of the linear light conductor 14 can be totally reflected at the light reflection portions 20a and can exit from the exit side of the linear light conductor 14 at exit angles $\theta_{OUT}(n)$ corresponding to the exit positions.

In this case, the following formula is given.

$$\tan(2 \cdot \theta(n) - \theta_{OUT}(n)) = \frac{\Delta L + X(n)}{\frac{3}{2}t} \qquad (1)$$

In Formula 1, n means the n-th light reflection portion. X(n) means the distance from the end surfaces of the linear light conductor 14 to the n-th light reflection portion. $\theta_{OUT}(n)$ means the exit angle of light reflected on the n-th light reflection portion.

When Formula 1 is transformed, a the tilt angle $\theta(n)$ of the planes of the light reflection portions 20a is expressed by the following formula.

$$\theta(n) = \frac{\tan^{-1}\left(\dfrac{\Delta L + X(n)}{\dfrac{3}{2}t}\right) + \theta_{OUT}(n)}{2} \quad \text{... (2)}$$

In the light reflection portions 20b, the tilt angle θ(n) of the planes of the light reflection portions 20b is set so that light incident on the light reflection portions 20b directly from the LED 12a can be totally reflected on the planes of the light reflection portions 20b and can exit from the exit side of the linear light conductor 14 at exit angles $\theta_{OUT}(n)$ corresponding to exit positions.

In this case, the following formula is given.

$$\tan(2\cdot\theta(n)-\theta_{OUT}(n)) = \frac{\Delta L + X(n)}{\frac{1}{2}t} \quad (3)$$

When Formula 3 is transformed, the tilt angle θ(n) of the planes of the light reflection portions 20b is expressed by the following formula.

$$\theta(n) = \frac{\tan^{-1}\left(\dfrac{\Delta L + X(n)}{\dfrac{1}{2}t}\right) + \theta_{OUT}(n)}{2} \quad \text{... (4)}$$

As shown in FIG. 2B, the tilt angle $\theta_L(n)$ of the left planes of the light reflection portions as viewed in the drawing is set so that light applied by the LED 12a disposed on the left side as viewed in the drawing exits at a required exit angle $\theta_{OUT}(n)$. On the other hand, the tilt angle $\theta_R(n)$ of the right planes of the light reflection portions as viewed in the drawing is set so that light applied by the LED 12b disposed on the right side as viewed in the drawing exits at a required exit angle $\theta_{OUT}(n)$.

Strictly, as shown in FIG. 4, if the distance ΔL between the linear light conductor 14, and the LEDs 12a, 12b is not 0 mm, an optical path is deflected because the refractive index $N_a$ of the air is different from the refractive index $N_g$ of the linear light conductor. However, the deflection of the optical path due to such factor is ignorable in giving tilt angles θ(n) of the planes of the light reflection portions 20. To simplify the calculation formulas, influences of such factors are ignored here.

Strictly, as shown in FIG. 4, light is emitted in surfaces from vicinities of the centers of the LEDs 12a, 12b. In giving tilt angles θ(n) of the planes of the light reflection portions 20, the calculation formulas are given on the assumption that light is emitted from the central points of the LEDs 12a, 12b. Errors made by the thus given formulas are negligible. To simplify the calculation formulas, it is assumed that light is emitted from the central points of the LEDs 12a, 12b.

Next, examples of specific set values of tilt angles θ(n) of the planes of the light reflection portions 20 of the present embodiment will be explained with reference to FIG. 5. FIG. 5 is a graph of the examples of tilt angles θ(n) of the planes of the light reflection portions . Distances X(n) from the end surfaces of the linear light conductor 14 to the light reflection portions 20 are shown on the horizontal axis. Tilt angles θ(n) of the planes of the light reflection portions 20 are shown on the vertical axis.

In this embodiment as well as in the second to sixth embodiments described below, the tilt angles θ(n) were calculated under the conditions that the display size was 2 inches, the display screen width was 35 mm, the number of the light reflection portions 20 was 150, the pitch of the light reflection portions 20 was 0.23 mm, the thickness t of the linear light conductor 14 was 3 mm, the length L of the linear light conductor 14 was 37 mm, the distance ΔL between the LEDs 12a, 12b and the linear light conductor 14 was 0 mm, the refractive index of the linear light conductor 14 was 1.51, and the distance between the viewer and the display screen was 350 mm.

When tilt angles $\theta(n)$ of the planes of the light reflection portions 20 are set as shown in FIG. 5, the light intensity distribution shown in FIG. 6 is obtained. FIG. 6 is a graph of a light intensity distribution of the lighting apparatus according to the present embodiment. Positions in (along) the linear light conductor are shown on the horizontal axis, and light intensity is shown on the vertical axis. Here, light exiting from the center of the linear light conductor 14 at an angle 0 degrees to the normal, reaches the viewer along with light from the ends of the linear light conductor 14, at angles of $\pm 2.8$ degrees. An intensity distribution of light which actually can reach the human eyes is given.

As seen in FIG. 6, the lighting apparatus according to the present embodiment can provide a substantially uniform light intensity distribution.

As described above, the lighting apparatus according to the present embodiment is characterized mainly in that tilt angles $\theta(n)$ of the planes of the light reflection portions 20 are set so that light can exit at required exit angles $\theta_{OUT}(n)$ corresponding to exit positions of the light from the linear photoconductor 14.

In the proposed lighting apparatus shown in FIG. 29, because all the planes of the light reflection portions are set at the same tilt angle a (see FIG. 31), light cannot exit at required exit angles corresponding to exit positions. Accordingly, the proposed lighting apparatus cannot make a uniform intensity distribution of light reaching the viewer's eye.

In contrast to this, in the present embodiment, tilt angles (n) of the planes of the light reflection portions 20 are set so that light can exit at required exit angles $\theta_{OUT}(n)$ corresponding to exit positions of the light from the linear light conductor 14. Accordingly, the light can be converged on the viewer's eye. Thus, according to the present embodiment, an intensity distribution of light arriving at the human eye can be made uniform. Thus, according to the present embodiment, good display characteristics can be realized.

[Modification]

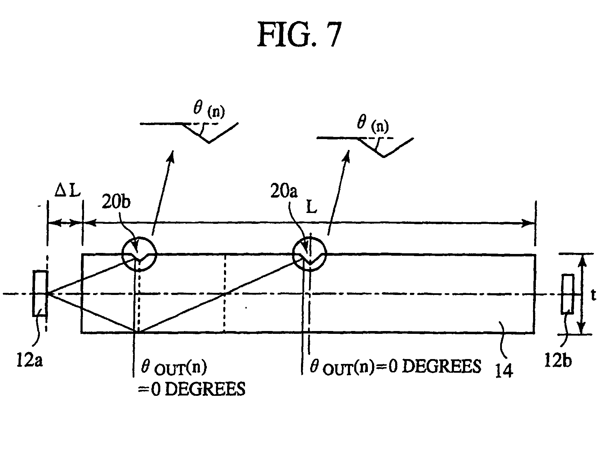

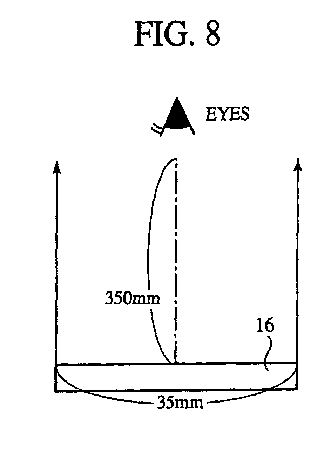

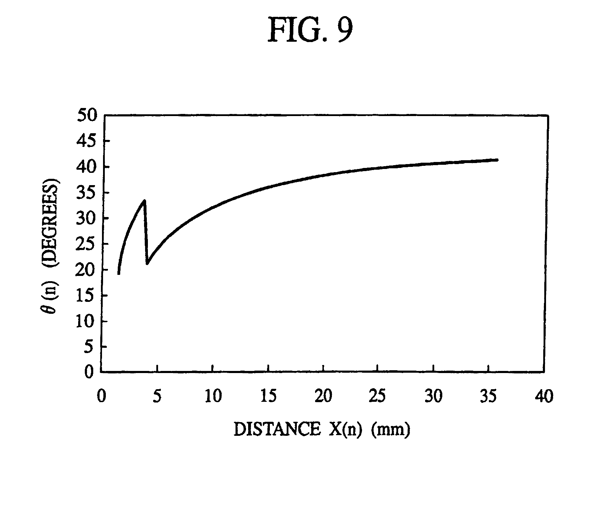

Although not in accordance with the present invention, a modification of the first embodiment of the present invention will be explained with reference to FIGs. 7 to 9, which is useful for understanding the later embodiments. The modified light apparatus is the subject of a divisional application. FIG. 7 is a plan view of the modified lighting apparatus and FIG. 8 is a conceptual view of relationships between a viewer and a display screen. FIG. 9 is a graph of examples of tilt angles of planes of light reflection portions of the modified lighting apparatus. Parts of this apparatus and subsequent embodiments corresponding to those of the lighting apparatus according to the first embodiment are represented by the same reference numbers so as to allow their explanation to be simplified or omitted.

In this modification, tilt angles $\theta(n)$ of the planes of the light reflection portions 20 are respectively set so that light exits from a linear light conductor 14 at a 0 degrees exit angle $\theta_{OUT}(n)$, i.e., in a direction perpendicular to the longitudinal direction of the photoconductor 14.

In the lighting apparatus according to the first embodiment, tilt angles $\theta(n)$ of the planes of the light reflection portions 20 are respectively set so that required exit angles $\theta_{OUT}(n)$ can be provided corresponding to exit positions. In practice, the viewer is not always normal to the surface light conductor 16. On the other hand, even when exit angles $\theta_{OUT}(n)$ are set uniformly to be 0 degrees, light spreads to some extent on its way to a viewer 350 mm from the display screen, and actually the same light intensity distribution as that of the first embodiment can be provided. Setting exit angles $\theta_{OUT}(n)$ to be uniform facilitates the calculation for giving tilt angles $\theta(n)$ of the planes of the light reflection portions 20.

Thus, in the modified apparatus, exit angles $\theta_{OUT}(n)$ are set uniformly at 0 degrees. To achieve this, Formula 2 and Formula 4 have the value $\theta_{OUT}(n)=0$ degrees substituted in them.

When Formula 2 has substituted $\theta_{OUT}(n)=0$ degrees, tilt angles $\theta(n)$ of the planes of the light reflection portions 20a are expressed by the following formula.

$$\theta(n) = \frac{\tan^{-1}\left(\dfrac{\Delta L + X(n)}{\dfrac{3}{2}t}\right)}{2} \quad \cdots (5)$$

When the Formula 4 has substituted $\theta_{OUT}(n)=0$ degrees, tilt angles $\theta(n)$ of the planes of the light reflection portions 20b are expressed by the following formula.

$$\theta(n) = \frac{\tan^{-1}\left(\dfrac{\Delta L + X(n)}{\dfrac{1}{2}t}\right)}{2} \quad \dots \quad (6)$$

Examples of set values of tilt angles θ(n) of the planes of the light reflection portions of the modified lighting apparatus will be explained with reference to FIG. 9. FIG. 9 is a graph of examples of tilt angles θ(n) of the planes of the light reflection portions given by the above-described formulas. Distances from the end surfaces of the linear light conductor 14 to the light reflection portions 20a, 20b are shown on the horizontal axis. Tilt angles θ(n) of the planes of the light reflection portions 20a, 20b are shown on the vertical axis.

The tilt angles θ(n) were calculated under the same conditions as in the first embodiment.

When tilt angles θ(n) of the planes of the light reflection portions 20a, 20b are set to be as shown in FIG. 9, exit angles $\theta_{OUT}(n)$ of light rays from the linear light conductor 14 are all 0 degrees, and substantially the same uniform light intensity distribution as that of the first embodiment can be provided. Thus, the modified apparatus as well as the first embodiment can realize good display characteristics.

[A Second Embodiment]

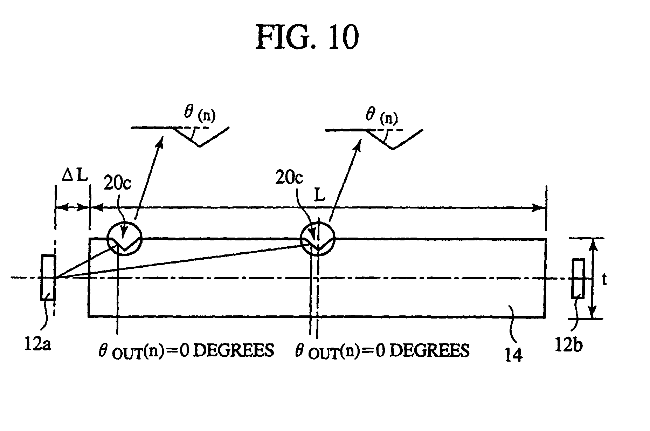

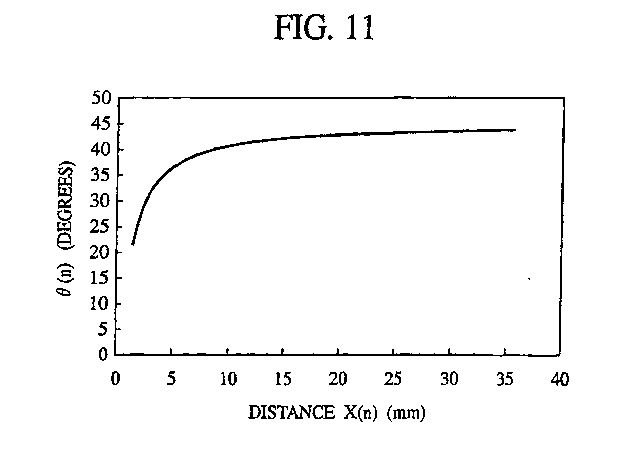

The lighting apparatus according to a second embodiment of the present invention will be explained with reference to FIGs. 10 and 11. FIG. 10 is a plan view of the lighting apparatus according to the present embodiment. FIG. 11 is a graph of examples of tilt angles of the planes of light reflection portions of the lighting apparatus according to the present embodiment.

This embodiment is characterized mainly in that tilt angles θ(n) of the planes of light reflection portions are set so that light is incident from LEDs 12a, 12b directly on all of the light reflection portions 20c, and the light is totally reflected on the light reflection portions 20c to exit from the exit side of a linear light conductor 14.

The lighting apparatus according to the first embodiment includes light reflection portions 20a having tilt angles θ(n) set so that light totally reflected on the plane on the exit side of the linear light conductor 14 is totally reflected further, and also light reflection portions 20b having tilt angles θ(n) set so that light incident directly from the LEDs 12a, 12b is totally reflected.

In contrast to this, in the present embodiment, as shown in FIG. 10, tilt angles θ(n) of the planes of light reflection portions 20c are set so that all the light reflection portions 20c totally reflect light incident directly from an LED 12a and an LED 12b. The light reflection portions 20c are formed in a plural number on the reflection side of the linear light conductor 14, but not all are shown in FIG. 10.

In this case, tilt angles θ(n) of the planes of the light reflection portions 20c may be set by using Formula 4 or Formula 6.

Next, examples of set values of tilt angles θ(n) of the planes of the light reflection portions of the lighting apparatus according to the present embodiment will be explained with reference to FIG. 11. FIG. 11 is a graph of the example of tilt angles θ(n) of the planes of the light reflection portions, which were given by the above-described formula. Distances X(n) from the end surfaces of the linear light conductor 14 to the light reflection portions 20c are shown on the horizontal axis. Tilt angles θ(n) of the planes of the light reflection portions 20c are shown on the vertical axis.

In the present embodiment, the tilt angles θ(n) were calculated under the same conditions as in the first embodiment.

Even with tilt angles θ(n) of the planes of the light reflection portions 20c thus set, exit angles $\theta_{OUT}(n)$ of the light rays exiting from the linear light conductor 14 are all 0 degrees, and substantially the same light intensity distribution as those of the first embodiment can be provided. Accordingly, the present embodiment can likewise realize good display characteristics.

[A Third Embodiment]

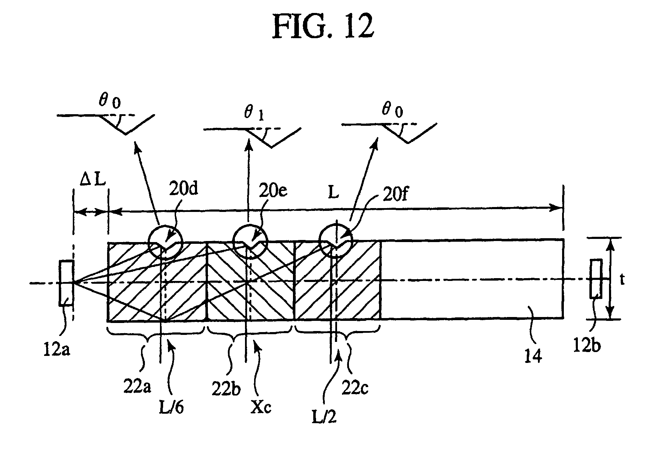

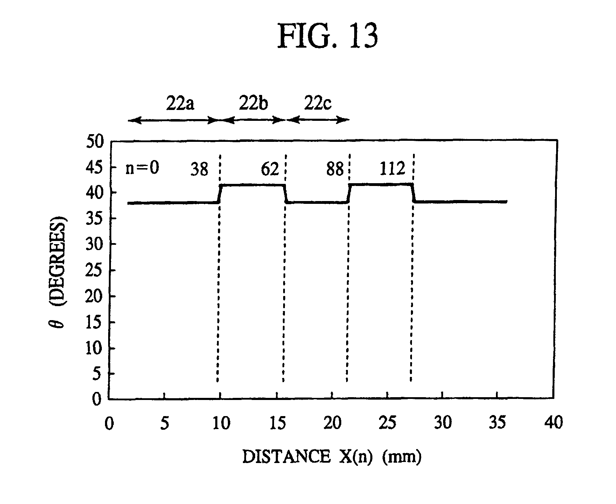

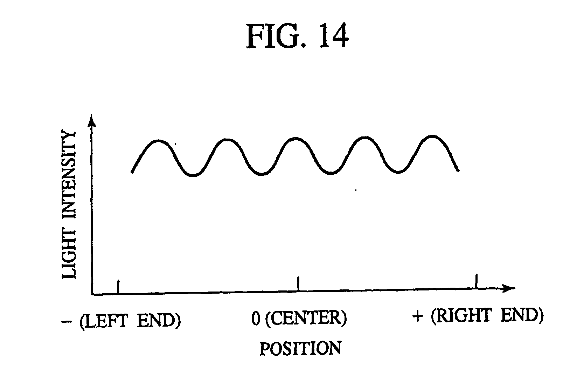

The lighting apparatus according to a third embodiment of the present invention will be explained with reference to FIGs. 12 to 14. FIG. 12 is a plan view of the lighting apparatus according to the present embodiment. FIG. 13 is a graph of example of tilt angles of the planes of light reflection portions of the lighting apparatus according to the present embodiment. FIG. 14 is a graph of a light intensity distribution of the lighting apparatus according to the present embodiment.

This embodiment is characterized mainly in that the linear light conductor 14 is longitudinally divided into a plurality of regions 22a, 22b, 22c, and tilt angles of the planes of a plurality of light reflection portions 20d-20f respectively formed in the divided regions (subregions) 22a, 22b, 22c are set to be the same among the divided regions 22a, 22b, 22c.

A number of the light reflection portions 20d-20f are formed on the reflection side of the linear light conductor 14, but only a few are shown in FIG. 12.

In the region 22c containing the center of the linear light conductor 14, a tilt angle $\theta_0$ of the planes of the light reflection portions 20f is set with respect to the central position L/2 of the linear light conductor 14 as a standard. A tilt angle $\theta_0$ of the planes of the light reflection portions 20f is set so that light totally reflected on the plane of the exit side of the linear light conductor 14 exits from the exit side of the linear light conductor 14. Then, the following formula is given.

$$\tan(2 \cdot \theta_0) = \frac{\Delta L + \frac{L}{2}}{\frac{3}{2}t} \tag{7}$$

By transforming Formula 7, a tilt angle $\theta_0$ of the planes of the light reflection portions 20f is given by the following formula.

$$\theta_0 = \frac{\tan^{-1}\left(\frac{\Delta L + \frac{L}{2}}{\frac{3}{2}t}\right)}{2} \quad \cdots (8)$$

In the region 22a near the end of the linear light conductor 14, a tilt angle $\theta'_0$ of the planes of the light reflection portions 20d is set with a position of L/6 of a distance from the ends of the linear light conductor 14 set as a standard. A tilt angle $\theta'_0$ of the planes of the light reflection portions 20d is set so that light incident directly on the light reflection portions 20d from the LED 12a is totally reflected on the light reflection portions 20d and exits from the exit side of the linear light conductor 14. The following formula is given.

$$\tan(2 \cdot \theta'_0) = \frac{\Delta L + \frac{L}{6}}{\frac{1}{2}t} \tag{9}$$

By transforming Formula 9, a tilt angle $\theta'_0$ of the planes of the light reflection portions 20d is expressed by the following formula.

$$\theta'_0 = \frac{\tan^{-1}\left(\frac{3 \cdot \Delta L + \frac{L}{2}}{\frac{3}{2}t}\right)}{2} \quad \cdots (10)$$

Here, when Formula 8 and Formula 10 are compared with each other, a value of $\Delta L$ is very small, and $\Delta L$ and $3 \Delta L$ are ignorable. The following formula is given.

$$\theta_0 \fallingdotseq \theta'_0 \tag{11}$$

Accordingly, in the region 22a near the ends of the linear light conductor 14 as well, a tilt angle $\theta_0$ of the planes of the light reflection portions 20d may be set by using Formula 8. Thus, in the present embodiment, a tilt angle of the planes of the light reflection portions 20f containing the center of the linear light conductor 14, and a tilt angle of the planes of the light reflection portions 20d of the region 22a near the ends of the linear light conductor 14 may be equally set to be $\theta_0$.

In the region 22b between the region 22a and the region 22c, a tilt angle $\theta_1$ of the planes of the light reflection portions 20e is set with a position ($X_c$) of the center of the region 22b set as a standard. A tilt angle $\theta_1$ of the planes of the light reflection portions 20e is set so that light incident directly on the light reflection portions 20e from the LED 12a is totally reflected on the light reflection portions 20e and exit from the exit side of the linear light conductor 14. Then the following formula is given.

$$\tan(2 \cdot \theta_1) = \frac{\Delta L + X_C}{\frac{1}{2}t} \tag{12}$$

By transforming Formula 12, a tilt angle $\theta_1$ of the planes of the light reflection portions 20e is expressed by the following formula.

$$\theta_1 = \frac{\tan^{-1}\left(\dfrac{\Delta L + X_C}{\frac{1}{2}t}\right)}{2} \quad \dots (13)$$

Examples of set values of tilt angles of the planes of the light reflection portions of the lighting apparatus according to the present embodiment will be explained with reference to FIG. 13. FIG. 13 is a graph of the examples of tilt angles $\theta$ of the planes of the light reflection portions given by using the above-described formula. Distances X(n) from the end surfaces of the linear light conductor to the light reflection portions are shown on the horizontal line. Tilt angles $\theta$ of the planes of the light reflection portions are shown on the vertical axis.

The same conditions as before were again used for calculating the tilt angles $\theta(n)$.

When tilt angles $\theta_0$, $\theta_1$ of the planes of the light deflection portions 20d-20f are set by using Formula 8 and Formula 13, the light intensity distribution shown in FIG. 13 can be obtained. FIG. 13 is a graph of an example of the light intensity distribution of the lighting apparatus according to the present embodiment. Positions with respect to the center of the linear light conductor 14 are shown on the horizontal axis. Light intensities produced when the liquid crystal display is viewed at a distance of 350 mm are shown on the vertical axis.

In the present embodiment, because tilt angles $\theta_0$, $\theta_1$ of the planes of the light reflection portions 20d, 20e, 20f are uniformly the same among the divided regions 22a, 22b, 22c, as positions of the light reflection portions 20d, 20e, 20f become further from the standard positions L/2, $X_c$, L/6, exit angles at which light exit from the linear photoconductor 14 gradually become larger. Thus, the present embodiment provides the light intensity distribution shown in FIG. 14.

As seen in FIG. 14, the present embodiment cannot make the light intensity distribution as uniform as the first or second embodiments, but in comparison with that of the proposed lighting apparatus shown in FIG. 29, the light intensity distribution of this embodiment is far more uniform.

As described above, it is one major characteristic of the lighting apparatus according to the present embodiment that the linear light conductor 14 is longitudinally divided in a plurality of regions 22a, 22b, 22c, and tilt angles of the planes of the light reflection portions 20d-20f are set to be the same among the sub-regions 22a, 22b, 22c.

Setting tilt angles of the light reflection portions corresponding to positions of the light reflection portions as in the first or second embodiments will increase costs of preparing a mould or the like for forming the linear light conductor.

In contrast to this, according to the present embodiment, tilt angles of the planes of the light reflection portions 20d, 20e, 20f are set at two kinds $\theta_0$ and $\theta_1$, and are very few. This makes it possible to reduce costs of preparing a mould, etc. for casting the linear light conductor. As described above, the lighting apparatus according to the present embodiment can provide a uniform light intensity distribution simply and at low cost.

[A Fourth Embodiment]

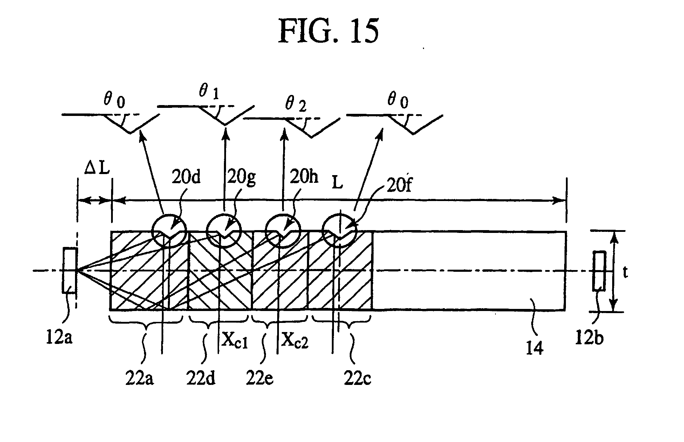

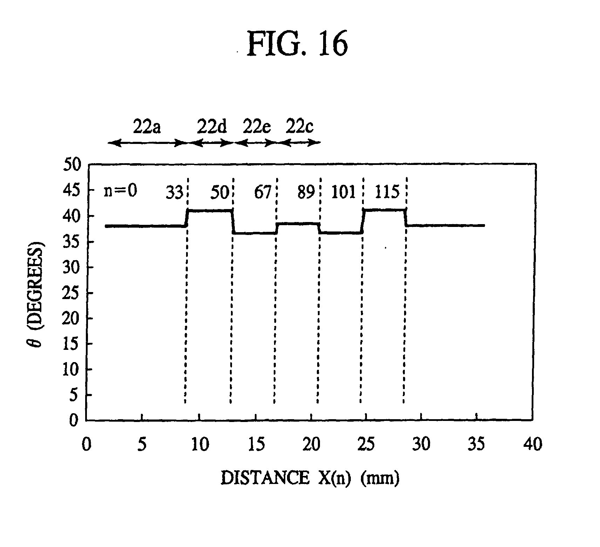

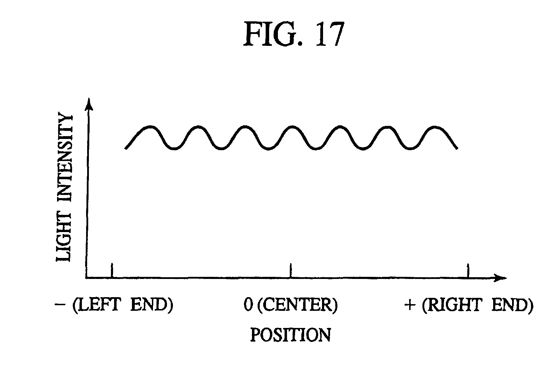

The lighting apparatus according to a fourth embodiment of the present invention will be explained with reference to FIGs. 15 to 17. FIG. 15 is a plan view of the lighting apparatus according to the present embodiment. FIG. 16 is a graph of examples of tilt angles of the planes of light reflection portions of the lighting apparatus according to the present embodiment. FIG. 17 is a graph of the light intensity distribution of the lighting apparatus according to the present embodiment.

The lighting apparatus according to the present embodiment is characterized mainly in that a linear light conductor 14 is longitudinally further divided than that of the third embodiment. Tilt angles of the planes of a plurality of light reflection portions 20d, 20f, 20g, 20h formed respectively in the regions 22a, 22c, 22d, 22e are set to be the same among the divided regions 22a, 22c, 22d, 22e.

The light reflection portions 20d, 20f, 20g, 20h are formed respectively in large numbers on the reflection side of the linear light conductor 14, but only a few are shown in FIG. 15.

In the region 22d, a tilt angle $\theta_1$ of the planes of light reflection portions 20g is set with a position $X_{C1}$ which is the center of the region 22d set as a standard.

A tilt angle $\theta_1$ of the planes of the light reflection portions 20g is set so that light incident directly on the light reflections 20g from an LED 12a is totally reflected from the planes of the light reflection portions 20g and exits from the exit side of the linear photoconductor 14. Then the following formula is given.

$$\tan(2\cdot\theta_1) = \frac{\Delta L + X_{C1}}{\frac{1}{2}t} \tag{14}$$

By transforming Formula 14, the tilt angle $\theta_1$ of the planes of the light reflection portions 20g is expressed by the following formula.

$$\theta_1 = \frac{\tan^{-1}\left(\dfrac{\Delta L + X_{C1}}{\frac{1}{2}t}\right)}{2} \quad \ldots(15)$$

In the region 22h, the tilt angle $\theta_2$ of the planes of the light reflection portions 20h is set with a position $X_{c2}$ of the center of the region 22h set as a standard. The tilt angle $\theta_2$ of the plane of the light reflection region 20h is set so that light totally reflected on the exit side of the linear photoconductor 14 is further totally reflected and exits from the exit side of the linear photoconductor 14. Then, the following formula is given.

$$\tan(2\cdot\theta_2) = \frac{\Delta L + X_{C2}}{\frac{3}{2}t} \tag{16}$$

By transforming Formula 16, the tilt angle $\theta_2$ of the planes of the light reflection portions 20h is expressed by the following formula.

$$\theta_2 = \frac{\tan^{-1}\left(\dfrac{\Delta L + X_{C2}}{\dfrac{3}{2}t}\right)}{2} \quad \dots (17)$$

Next, examples of set values of tilt angles of the planes of the light reflection portions of the lighting apparatus according to the present embodiment will be explained with reference to FIG. 16. FIG. 16 is a graph of the examples of tilt angles of the light reflection portions given by using the above-described formula. Distances X(n) from the end surfaces of the linear photoconductor and the light reflection portions are shown on the horizontal axis. Title angles of the planes of the light reflection portions are shown on the vertical axis.

Once again, the tilt angles $\theta(n)$ were calculated under the same conditions as in the first embodiment.

In the present embodiment, tilt angles $\theta_0$, $\theta_1$, $\theta_2$ of the planes of the light reflection portions 20d, 20f, 20g, 20h are uniformly set to be the same among the divided regions 22a, 22c, 22d, 22e. Accordingly, as positions of the light reflection portions 20d, 20f, 20g, 20h become further from the standard positions L/2, $X_{C1}$, $X_{C2}$, L/6, exit angles at which light rays exit from the linear light conductor 14 gradually become larger. Thus, the present embodiment has the light intensity distribution shown in FIG. 17.

As seen in FIG. 17, in comparison with the light intensity distribution of the lighting apparatus according to the third embodiment shown in FIG. 14, the light intensity distribution of the present embodiment has a smaller difference between a high light intensity and a low light intensity.

Based on this, according to the present embodiment, in comparison with the third embodiment, a difference between a high light intensity and a low light intensity can be small.

As described above, according to the present embodiment, because the light conductor is longitudinally divided into smaller regions than in the third embodiment, a difference between a high light intensity and a low light intensity can be smaller in comparison with that of the third embodiment.

(A Fifth Embodiment)

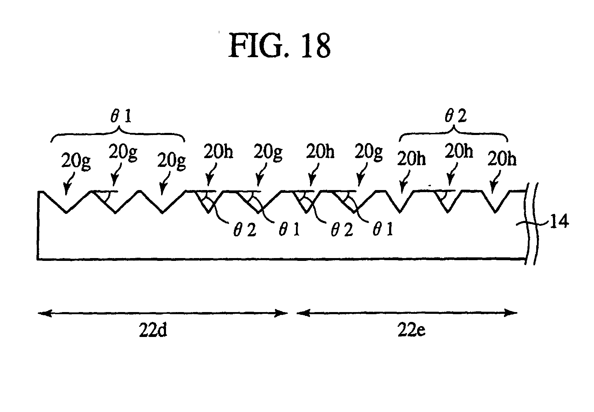

The lighting apparatus according to a fifth embodiment of the present invention will be explained with reference to FIG. 18. FIG. 18 is a plan view of the lighting apparatus according to the present embodiment

which is a modification of the fourth embodiment. In the present embodiment, in a bordering region between a region 22d and a region 22e, a light reflection portion 20g having a tilt angle $\theta_1$ and a light reflection region 20h having a tilt angle $\theta_2$ are alternately formed, whereby an extreme light intensity difference at the border between the region 22d and the region 22e can be prevented.

[A Sixth Embodiment]

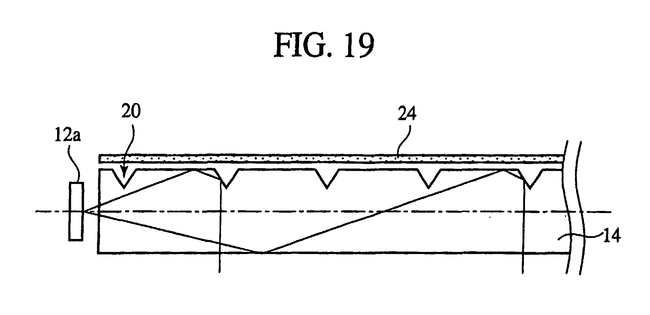

The lighting apparatus according to a sixth embodiment of the present invention will be explained with reference to FIG. 19, which is a plan view.

In this embodiment, a reflection means 24 which is separate from the linear light conductor 14 is disposed on the reflection side of the linear light conductor 14, i.e., the side where light reflection portions 20 are formed, as shown in FIG. 19. The reflection means 24 can be a holder or similar of aluminum covering at least the reflection side of the linear light conductor 14.

In the first to the fifth embodiments, the reflection coating 20 is formed on the reflection side of the linear light conductor 14 to prevent light from leaking out of the linear light conductor 14. However, in the present embodiment, the reflection means 24 disposed separate from the linear light conductor 14 returns into the linear light conductor 14 light leaking from the reflection side of the linear light conductor 14.

Thus, the reflection means 24 provided in place of the reflection coating 20 can return into the linear light conductor 14 light leaking from the reflection side of the linear light conductor 14, whereby reduction in brightness due to light leakage is avoided.

As described above, it is not essential to form the reflection coating on the reflection side of the linear light conductor 14. As in the present embodiment, the reflection means 24 may be provided separate from the linear light conductor 14.

[A Seventh Embodiment]

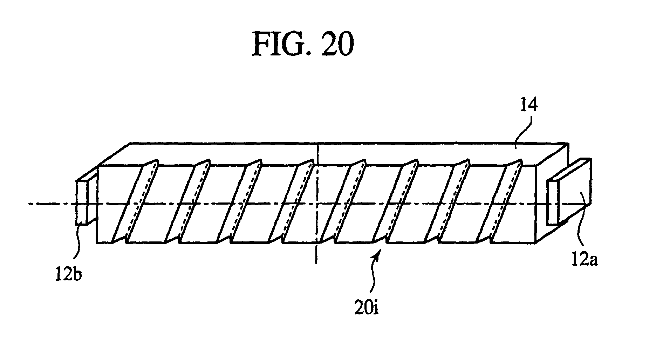

The lighting apparatus according to a seventh embodiment of the present invention will be explained with reference to FIG. 20. FIG. 20 is a perspective view of the lighting apparatus according to the present embodiment.

The lighting apparatus according to the present embodiment is characterized mainly in that light reflection portions 20j are obliquely extended longitudinally in a linear light conductor 14.

In the lighting apparatus according to the first to the sixth embodiments, the light reflection portions 20 are perpendicularly extended longitudinally in the linear light conductor 14. In the present embodiment, however, the light reflection portions 20j are obliquely extended longitudinally in the linear light conductor 14. In this way the light intensity distribution can be made further uniform.

[An Eighth Embodiment]

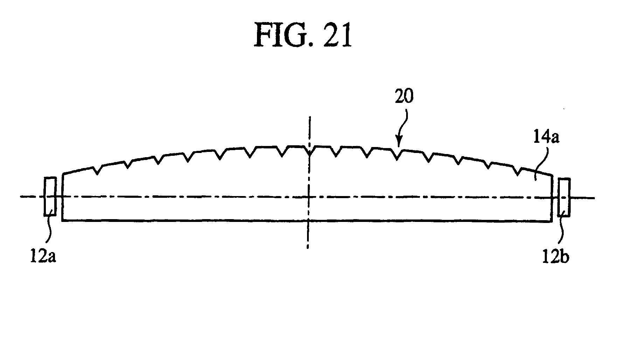

The lighting apparatus according to an eighth embodiment of the present invention will be explained with reference to FIG. 21. FIG. 21 is a plan view of the lighting apparatus according to this embodiment, in which the reflection side of a linear light conductor 14a, i.e., the side where light reflection portions 20 are formed, is curved.

In the lighting apparatus according to the first to the seventh embodiments, light from the LEDs 12a, 12b can be often hindered from entering those of the light reflection portions 20 remote from the LEDs 12a, 12b, by the other light reflection portions 20.

In contrast to this, according to the present embodiment, because the reflection side of the linear light conductor 14a is curved, light can be incident even on those of the light reflection portions 20 remote from the LEDs 12a, 12b without being hindered by the other light reflection portions 20. Thus, the lighting apparatus according to the present embodiment can provide an even more uniform light intensity distribution.

[A Ninth Embodiment]

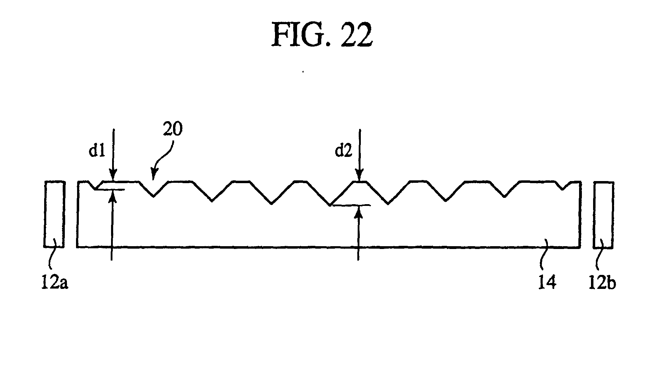

The lighting apparatus according to a ninth embodiment of the present invention will be explained with reference to FIG. 22. FIG. 22 is a plan view of the lighting apparatus according to the present embodiment.

The lighting apparatus according to the present embodiment is characterized mainly in that the areas of light reflection portions 20 are increased for the portions 20 remoter from LED 12a, 12b, i.e., grooves forming the light reflection portions 20 are deeper as the grooves are remoter from the LEDs 12a, 12b.

As shown in FIG. 22, grooves forming light reflection portions 20, which are near LEDs 12a, 12b have a depth set to be $d_1$, and as grooves forming the light reflection portions 20 lie further from the LEDs 12a, 12b, their depths are larger. At the center of the linear light conductor 14a, the groove forming the light reflection portions 20 has a depth $d_2$ which is larger than the depth $d_1$.

In the lighting apparatus according to the first to the seventh embodiments, light from the LEDs 12a, 12b can be often hindered from entering those of the light reflection portions 20 remote from the LEDs 12a, 12b, by the other light reflection portions 20.

In contrast to this, in the present embodiment, the width of the planes of the light reflection portions 20 is increased with distance from the LEDs 12a, 12b, whereby light can be incident on even those of the light reflection portions 20 remote from the LEDs 12a, 12b without being hindered by the other light reflection portions 20.

[A Tenth Embodiment]

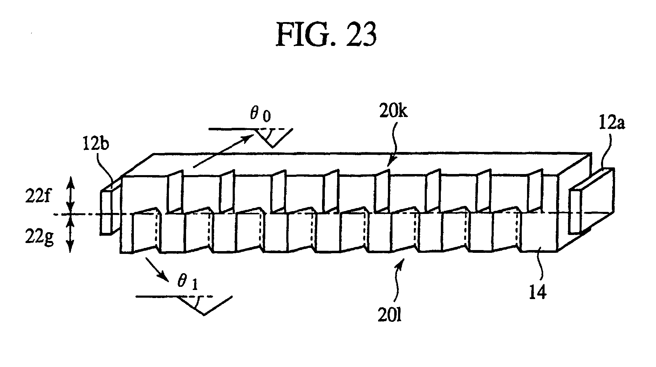

The lighting apparatus according to a tenth embodiment of the present invention will be explained with reference to FIG. 23. FIG. 23 is a perspective view of the lighting apparatus according to the present embodiment.

The lighting apparatus according to the present embodiment is characterized mainly in that a region of a linear light conductor 14 on the reflection side thereof is divided into upper and a lower stages, i.e., the linear light conductor 14 on the reflection side thereof is divided perpendicularly to its longitudinal direction, and tilt angles of light reflection portions 20k in the upper region 22f are uniformly set to be $\theta_0$, and tilt angles of light reflection portions 221 in the lower region 22g are uniformly set to be $\theta_1$.

In the lighting apparatus according to the fourth and the fifth embodiments, the linear light conductor 14 is longitudinally divided into sub-regions, but in the present embodiment, the linear light conductor 14 is divided in a plurality of upper and lower regions, i.e., the linear light conductor 14 is divided transversely to its longitudinal direction.

Even in the case that the linear light conductor is thus divided vertically in a plurality of regions, a light intensity distribution can be made uniform even when tilt angles of the light reflection portions of the divided regions are set to be uniformly the same.

[An Eleventh Embodiment]

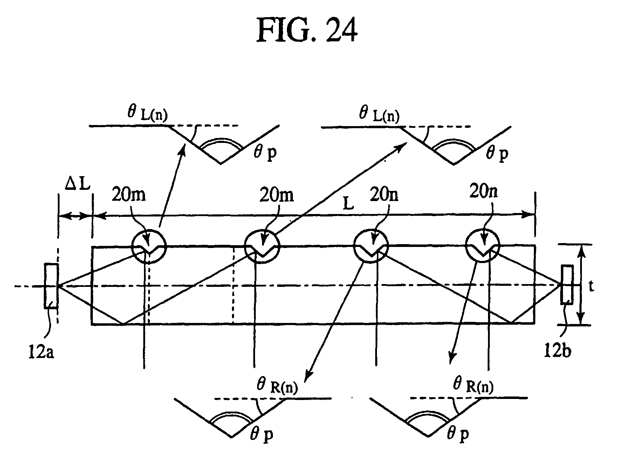

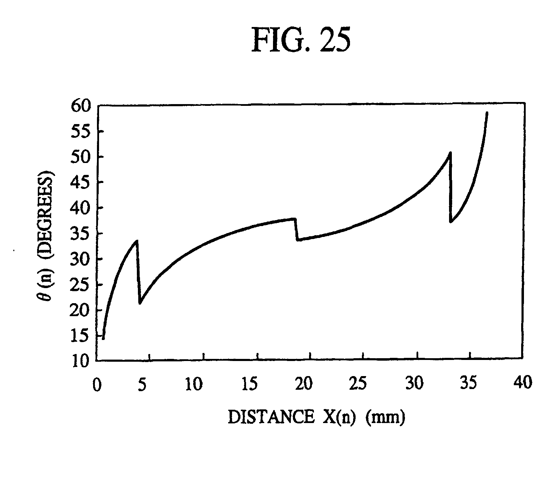

The lighting apparatus according to an eleventh embodiment of the present invention will be explained with reference to FIGs. 24 and 25. FIG. 24 is a perspective view of the lighting apparatus according to the present embodiment. FIG. 25 is a graph of examples of tilt angles of the planes of the right reflection portions of the lighting apparatus according to the present embodiment.

The lighting apparatus according to the present embodiment is characterized mainly in that V-shaped grooves forming light reflection portions 20m, 20n have the same configuration, and the light reflection portions 20m disposed on the left side of the center of a linear photoconductor 14 as viewed in the drawing have the planes on the left side as viewed in the drawing set at a tilt angle $\theta_L(n)$ so that light emitted by an LED 12a disposed on the left side as viewed in the drawing exit vertically to the longitudinal direction of the linear light conductor 14, and the light reflection portions 20n disposed on the right side of the center of the linear photoconductor 14 as viewed in the drawing have the planes on the right side as viewed in the drawing set at a tilt angle $\theta_R(n)$ so that light emitted by an LED 12b disposed on the right side as viewed in the drawing exit vertically to the longitudinal direction of the linear photoconductor 14.

Large numbers of portions 20m and 20n are formed on the reflection side of the linear light conductor 14, but only a few are shown in FIG. 24.

As shown in FIG. 24, the light reflection portions 20m formed on the left side of the center of the linear light conductor 14 (as viewed in the drawing) have their left-side planes set at a tilt angle $\theta_L(n)$, so that light emitted by the left-hand LED 12a is reflected at the left-side planes of the light reflection portions 20m, and exits perpendicularly to the longitudinal direction of the linear light conductor 14.

The tilt angle $\theta_L(n)$ of the planes of the light reflection portions 20m on the left side as viewed in the drawing may be set by, e.g., the above-described Formula 2 or Formula 4. In this case, the end surface of the linear light conductor 14 on the left side as viewed in the drawing is the standard for a distance X(n).

On the other hand, as shown in FIG. 24, the light reflection portions 20n formed on the right side of the center of the linear light conductor 14 have their right-side planes set at a tilt angle $\theta_R(n)$ so that light emitted by the right-hand LED 12b is reflected on the right-side planes of the light reflection portions 20n and exits perpendicularly to the longitudinal direction of the linear light conductor 14.

The tilt angle $\theta_R(n)$ of the planes of the light reflection portions 20n on the right side as viewed in the drawing may be set by, e.g., the above-described Formula 2 or Formula 4. In this case, the end surface of the linear light conductor 14 on the right side as viewed in the drawing is the standard for a distance X(n).

Angles $\theta_P$ formed by the planes of the V-shaped grooves forming the light reflection portions 20m, 20n are the same.

In the present embodiment, included (subtended) angles $\theta_P$ formed by the planes of the V-shaped grooves forming the light reflection portions are the same. A tilt angle of the planes on the right side, as viewed in the drawing, of the light reflection portions 20m is an angle given by subtracting a tilt angle $\theta_L(n)$ and an included angle $\theta_P$ from 180 degrees. Accordingly, light incident on the planes on the right side of the light reflection portions 20m as viewed in the drawing from the LED 12b does not always exit vertically to the longitudinal direction of the linear light conductor 14.

However, without any special problem, light emitted by the LED 12b is reflected on the planes on the right side, as viewed in the drawing, of the light reflection portions 20n and exits vertically to the longitudinal direction of the linear light conductor 14.

In the present embodiment, because included angles $\theta_P$ of the planes of the V-shaped grooves forming the light reflection portions are set to be the same, a tilt angle of the planes on the left side, as viewed in the drawing, of the light reflection portions 20n is an angle given by subtracting a tilt angle $\theta_R(n)$ and an included angle $\theta_P$ from 180 degrees. Thus, light incident on the planes on the left side, as viewed in the drawing, of the light reflection portions 20n does not always exit perpendicularly to the longitudinal direction of the linear light conductor 14.

However, without any special problem, light incident from the LED 12a is reflected on the planes on the left side, as viewed in the drawing, of the light reflection portions 20m and exits perpendicular to the longitudinal direction of the linear light conductor 14.

Next, examples of set values of the tilt angles of the planes of the light reflection portions of the lighting apparatus according to the present embodiment will be explained with reference to FIG. 25. FIG. 25 is a graph of the examples of tilt angles of the light reflection portions, given by the above-described formula. Distances X(n) from the end surfaces of the linear light conductor and the light reflection portions are shown on the horizontal axis. Tilt angles of the planes of the light reflection portions are shown on the vertical axis.

The tilt angles were calculated under the conditions that the display size was 2 inches, display screen width was 35 mm, number of the light reflection portions 20 was 170, pitch of the light reflection portions 20 was 0.21 mm, thickness t of the linear light conductor 14 was 3 mm, length L of the linear light conductor 14 was 37 mm, distance $\Delta L$ between the LEDs 12a, 12b and the linear light conductor 14 was 0 mm, refractive index of the linear light conductor 14 was 1.51, and distance viewer to screen was 350 mm.

According to the present embodiment, the V-shaped grooves forming the light reflection portions 20m, 20n have the same configuration. Accordingly, one kind of cutting tool for forming a mould, etc. to manufacture linear light conductor 14 can be used. Thus, according to the present embodiment, the mould, etc. can be formed at low cost, which makes it possible to provide at low cost the lighting apparatus which can provide a uniform light intensity distribution.

[A Twelfth Embodiment]

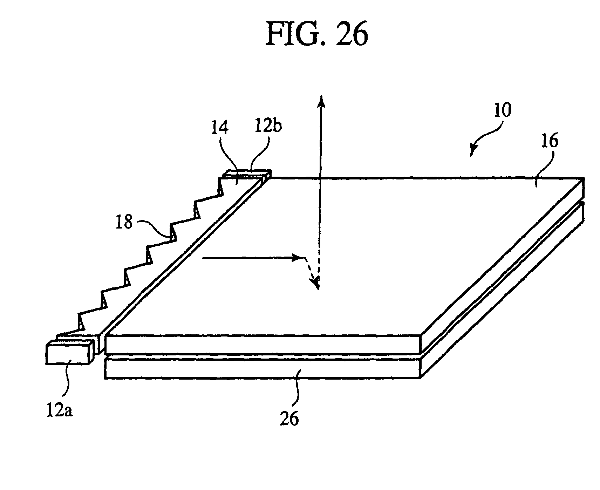

The liquid crystal display according to a twelfth embodiment of the present invention will be explained with reference to FIG. 26. FIG. 26 is a perspective view of the liquid crystal display according to the present embodiment.

The liquid crystal display according to the present embodiment comprises a combination of the lighting apparatus according to any one of the first to the eleventh embodiments, and a reflection-type liquid crystal panel.

As shown in FIG. 26, the lighting apparatus 10 according to any one of the first to the eleventh embodiments is provided on a reflection-type liquid crystal panel 26.

Light exiting from the linear light conductor 14 of the lighting apparatus 10 is incident on the reflection-type liquid crystal panel 26 via the surface light conductor 16, is reflected on a mirror (not shown) disposed in the reflection-type liquid crystal panel 26, and enters the viewer's eye. In the present embodiment, the lighting apparatus 10 functions as a front light.

According to the present embodiment, the liquid crystal display uses the lighting apparatus according to any one of the first to the eleventh embodiments, whereby the reflection-type liquid crystal panel can be illuminated with a uniform light intensity. Accordingly, the liquid crystal display according to the present embodiment can have good display characteristics.

[A Thirteenth Embodiment]

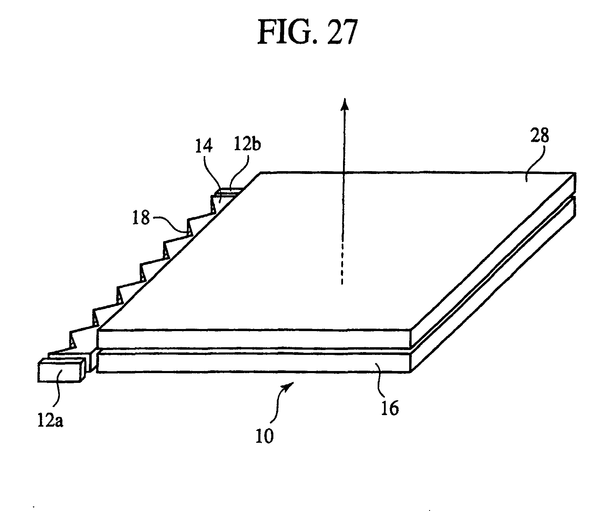

The liquid crystal display according to a thirteenth embodiment of the present invention will be explained with reference to FIG. 27. FIG. 27 is a perspective view of the liquid crystal display according to the present embodiment.

The liquid crystal display according to the present embodiment comprises a combination of the lighting apparatus according to any one of the first to the eleventh embodiments, and a transmission-type liquid crystal panel.

As shown in FIG. 27, a transmission-type liquid crystal panel 26 is provided on the lighting apparatus 10 (backlight) according to any one of the first to the eleventh embodiments.

Light exiting from the linear light conductor 14 is incident on the transmission-type liquid crystal panel 28 via the surface light conductor 16, transmitted by the transmission-type liquid crystal panel 28, and incident on the human eye.

As described above, according to the present embodiment, the liquid crystal display using the transmission-type liquid crystal panel can provide good display characteristics.

[Modifications]

The present invention is not limited to the above-described embodiments and can cover other various modifications.

For example, in the tenth embodiment, the linear light conductor is divided into upper and lower regions. However, the linear light conductor may be divided into more than two regions, whereby further uniform light intensity distributions can be obtained. However, as more regions are provided, a larger number of set angles of light reflection portions are required. Accordingly, it is preferable to set a suitable number of regions in consideration of a required uniform light intensity distribution and allowable costs.

**Claims**

**1.** A lighting apparatus (10) comprising a light source (12a, 12b) for emitting light, and a linear light conductor (14), having a reflection side and an exit side facing each other and extending in a longitudinal direction, and ends transverse to the longitudinal direction, the light source being arranged so that the light emitted by the light source (12a, 12b) is introduced into the linear light conductor (14) through a said end of the linear light conductor, the linear light conductor reflecting the light incident on a plurality of light reflection portions formed on a reflection side, and causing the light to exit linearly from the exit side, **characterised by**:

    planes of the plural light reflection portions being respectively tilted at different angles according to the positions in the longitudinal direction of the light reflection portions so that the existing light is converged to a viewpoint.

2. A lighting apparatus according to claim 1, wherein
the plural light reflection portions (20) are similar V-shaped grooves, one side of which form the planes of the light reflection portions.

3. A lighting apparatus according to claim 1 or 2, wherein
the linear light conductor (14) is longitudinally divided into a plurality of regions (22a, 22b, 22c); and
in each divided region, the planes of the plural light reflection portions (20) are tilted at the same angle ($\theta_0$, $\theta_1$).

4. A lighting apparatus according to claim 3, wherein
the planes of the plural light reflection portions (20) are tilted at the same angles in a region containing the center of the linear light conductor (14) and in the regions near the ends of the linear light conductor.

5. A lighting apparatus according to claim 3, wherein
in a first longitudinally divided region (22d) of the linear light conductor (14), the planes of the light reflection portions (20g) are tilted equally at a first angle ($\theta_1$) ;
in a second region (22e) adjacent to the first region (22d), the planes of the light reflection portions (20h) are tilted equally at a second angle ($\theta_2$) which is different from the first angle ($\theta_1$); and
in a region near the border between the first region (22d) and the second region (22e), the light reflection portions having the planes tilted at the first angle and the light reflection portions having the planes tilted at the second angle are mixed.

6. A lighting apparatus according to claim 1 or 2, wherein
the linear light conductor (14) is divided into a plurality of regions (22f, 22g) perpendicularly to the longitudinal direction; and
in each divided region, the planes of the plural light reflection portions (20k, 201) are tilted at the same angle.

7. A lighting apparatus according to claim 1 or 2, wherein
the light reflection portions (20i) extend obliquely to the longitudinal direction of the linear light conductor (14).

8. A lighting apparatus according to claim 1, wherein
the planes of the plural light reflection portions (20) are respectively tilted at said different angles according to the positions in the longitudinal direction on the light reflection portion (20) so that the light emitted substantially from the center of the light source (12a, 12b) converged to the viewpoint.

9. A lighting apparatus according to any preceding claim, further comprising
a planer light conductor (16) optically coupled to the linear light conductor, for causing the light entering from the linear light conductor (14) to exit in plane.

10. A lighting apparatus according to any preceding claim, wherein
the linear light conductor (14a) has the reflection side curved.

11. A lighting apparatus according to any preceding claim, wherein
the width of one plane of the light reflection portions (20m, 20n), and the width of the other plane of the light reflection portions are different from each other.

12. A lighting apparatus according to any preceding claim, wherein
a reflection coating (18) is further formed on the reflection side of the linear light conductor (14).

13. A lighting apparatus according to any of claims 1 to 13, further comprising
reflection means (24) provided on the reflection side of the linear light conductor (14) separately from the linear light conductor (14).

14. A lighting apparatus according to any preceding claim, wherein
the linear light conductor (14) is formed substantially in the form of a square-section rod.

15. A liquid crystal display comprising a lighting apparatus (10) and a liquid crystal display panel (26, 28) illuminated by the lighting apparatus, the lighting apparatus including a light source (12a, 12b) for emitting light, and a linear photoconductor (14), having a reflection side and an exit side facing each other and extending in a longitudinal direction, and ends transverse to the longitudinal direction, the light source being arranged so that the light emitted by the light source (12a, 12b) is introduced into the linear light conductor (14) through a said end of the linear light conductor, the linear light conductor reflecting the light incident on a plurality of light reflection portions (20) formed on a reflection side, and causing the light to exit linearly from the exit side, **characterised by**:

planes of the plural light reflection portions being respectively tilted at different angles according to the positions in the longitudinal direction of the light reflection portions so that the exiting light is converged to a viewpoint.

**Patentansprüche**

1. Leuchtvorrichtung (10) mit einer Lichtquelle (12a, 12b) zum Emittieren von Licht und einem linearen Lichtleiter (14) mit einer Reflexionsseite und einer Austrittsseite, die einander gegenüberliegen und in einer Längsrichtung verlaufen, und Enden quer zur Längsrichtung, welche Lichtquelle so angeordnet ist, dass das von der Lichtquelle (12a, 12b) emittierte Licht durch das Ende des linearen Lichtleiters in den linearen Lichtleiter (14) eingeführt wird, welcher lineare Lichtleiter das Licht reflektiert, das auf mehrere Lichtreflexionsabschnitte fällt, die auf einer Reflexionsseite gebildet sind, und das Licht aus der Austrittsseite linear austreten läßt, **gekennzeichnet durch**:

Ebenen der mehreren Lichtreflexionsabschnitte, die jeweils unter verschiedenen Winkeln entsprechend den Positionen in der Längsrichtung der Uchtreflexionsabschnitte geneigt sind, so dass das austretende Licht zu einem Blickpunkt konvergiert wird.

2. Leuchtvorrichtung nach Anspruch 1, worin:

die mehreren Lichtreflexionsabschnitte (20) ähnliche V-förmige Rillen sind, deren eine Seite die Ebenen der Lichtreflexionsabschnitte bildet.

3. Leuchtvorrichtung nach Anspruch 1 oder 2, worin:

der lineare Lichtleiter (14) in Längsrichtung in mehrere Bereiche (22a, 22b, 22c) geteilt ist; und
in jedem geteilten Bereich die Ebenen der mehreren Lichtreflexionsabschnitte (20) unter dem gleichen Winkel ($\theta_0$, $\theta_1$) geneigt sind.

4. Leuchtvorrichtung nach Anspruch 3, worin:

die Ebenen der mehreren Lichtreflexionsabschnitte (29) in einem Bereich, der die Mitte des linearen Lichtleiters (14) enthält, und in den Bereichen nahe den Enden des linearen Lichtleiters unter den gleichen Winkeln geneigt sind.

5. Leuchtvorrichtung nach Anspruch 3, worin:

in einem in Längsrichtung geteilten ersten Bereich (22d) des linearen Lichtleiters (14) die Ebenen der Lichtreflexionsabschnitte (20g) unter einem ersten Winkel ($\theta_1$) gleich geneigt sind;
in einem dem ersten Bereich (22d) benachbarten zweiten Bereich (22e) die Ebenen der Lichtreflexionsabschnitte (20h) unter einem vom ersten Winkel ($\theta_1$) verschiedenen zweiten Winkel ($\theta_2$) gleich geneigt sind; und
in einem Bereich nahe der Grenze zwischen dem ersten Bereich (22d) und dem zweiten Bereich (22e) die Lichtreflexionsabschnitte mit den unter dem ersten Winkel geneigten Ebenen und die Lichtreflexionsabschnitte mit den unter dem zweiten Winkel geneigten Ebenen gemischt sind.

6. Leuchtvorrichtung nach Anspruch 1 oder 2, worin:

der lineare Lichtleiter (14) in mehrere Bereiche (22f, 22g) senkrecht zur Längsrichtung geteilt ist;
in jedem geteilten Bereich die Ebenen der mehreren Lichtreflexionsabschnitte (20k, 201) unter dem gleichen Winkel geneigt sind.

7. Leuchtvorrichtung nach Anspruch 1 oder 2, worin:

die Lichtreflexionsabschnitte (20i) schräg zur Längsrichtung des linearen Lichtleiters (14) verlaufen.

8. Leuchtvorrichtung nach Anspruch 1, worin:

   die Ebenen der mehreren Lichtreflexionsabschnitte (20) jeweils unter den verschiedenen Winkeln gemäß den Positionen in der Längsrichtung auf dem Lichtreflexionsabschnitt (20) geneigt sind, so dass das im wesentlichen von der Mitte der Lichtquelle (12a, 12b) emittierte Licht zum Blickpunkt konvergiert wird.

9. Leuchtvorrichtung nach einem der vorhergehenden Ansprüchen, ferner mit:

   einem ebenen Lichtleiter (16), der mit dem linearen Lichtleiter optisch gekoppelt ist, um das vom linearen Lichtleiter (14) eintretende Licht In einer Ebene austreten zu lassen.

10. Leuchtvorrichtung nach einem der vorhergehenden Ansprüche, worin:

    die Reflexionsseite des linearen Lichtleiters (14a) gekrümmt ist.

11. Leuchtvorrichtung nach einem der vorhergehenden Ansprüche, worin:

    die Breite einer Ebene der Lichtreflexionsabschnitte (20m, 20n) und die Breite der anderen Ebene der Lichtreflexionsabschnitte voneinander verschieden sind.

12. Leuchtvorrichtung nach einem der vorhergehenden Ansprüche, worin:

    auf der Reflexionsseite des linearen Lichtleiters (14) ferner eine Reflexionsbeschichtung (12) ausgebildet ist.

13. Leuchtvorrichtung nach einem der Ansprüche 1 bis 12, ferner mit:

    einem Reflexionsmittel (24), das auf der Reflexionsseite des linearen Lichtleiters (14) separat vom linearen Lichtleiter (14) vorgesehen ist.

14. Leuchtvorrichtung nach einem der vorhergehenden Ansprüche, worin:

    der lineare Lichtleiter (14) im wesentlichen in der Form einer Stange mit viereckigem Querschnitt ausgebildet ist.

15. Flüssigkristallanzeige mit einer Leuchtvorrichtung (10) und einem Flüssigkristallanzeigefeld (26, 28), das durch die Leuchtvorrichtung beleuchtet wird, welche Leuchtvorrichtung eine Lichtquelle (12a, 12b) zum Emittieren von Licht und einen linearen Photoleiter (14) enthält, der eine Reflexionsseite und eine Austrittsselte aufweist, die einander gegenüberliegen und in einer Längsrichtung verlaufen, und Enden quer zur Längsrichtung, welche Lichtquelle so angeordnet ist, dass das von Lichtquelle (12a, 12b) emittierte Licht durch das Ende des linearen Lichtleiters in den linearen Lichtleiter (14) eingeführt wird, welcher lineare Lichtleiter das Licht reflektiert, das auf mehrere Lichtreflexionsabschnitte (20) fällt, die auf einer Reflexionsseite gebildet sind, und das Licht linear aus der Austrittsseite austreten lässt, **gekennzeichnet durch**:

    Ebenen der mehreren Lichtreflexionsabschnitte, die jeweils unter verschiedenen Winkeln gemäß den Positionen in der Längsrichtung der Lichtreflexionsabschnitte geneigt sind, so dass das austretende Licht zu einem Blickpunkt konvergiert wird.

## Revendications

1. Dispositif d'éclairage (10) comprenant une source de lumière (12a,12b) servant à émettre une lumière, et un guide de lumière linéaire (14) possédant un côté de réflexion et un côté de sortie qui se font face et s'étendent dans une direction longitudinale, et des extrémités transversales par rapport à la direction longitudinale, la source de lumière étant agencée de telle sorte que la lumière émise par sur la source de lumière (12a,12b) est introduite dans le guide de lumière linéaire (14) par une extrémité du guide de lumière linéaire, le guide de lumière linéaire de réflexion de la lumière qui rencontre une pluralité de parties de réflexion de la lumière, formées sur un côté de réflexion, et amenant la lumière à sortir linéairement par le côté de sortie, **caractérisé par** :

des plans de la pluralité de parties de réflexion de la lumière étant respectivement inclinés sous des angles différents en fonction des positions dans la direction longitudinale des parties de réflexion de la lumière de sorte que la lumière sortante converge en direction d'un point d'observation.

2. Dispositif d'éclairage selon la revendication 1, dans lequel
la pluralité de parties (20) de réflexion de la lumière sont des rainures similaires en forme de V, dont un côté forme les plans des parties de réflexion de la lumière.

3. Dispositif d'éclairage selon la revendication 1 ou 2, dans lequel
le guide de lumière linéaire (14) est divisé longitudinalement en une pluralité de régions (22a,22b, 22c); et
dans chaque région formée par division, les plans de la pluralité de parties (20) de réflexion de la lumière sont inclinés sous le même angle ($\theta_0$, $\theta_1$).

4. Dispositif d'éclairage selon la revendication 1, dans lequel
les plans de la pluralité de parties (20) de réflexion de la lumière sont inclinés sous des angles identiques dans une région contenant le centre du guide de lumière linéaire (14) et dans des régions proches des extrémités du guide de lumière linéaire.

5. Dispositif d'éclairage selon la revendication 3, dans lequel
dans une première région divisée longitudinalement (22d) du guide de lumière linéaire (14), les plans des parties (20c) de réflexion de la lumière sont inclinés de la même manière sous un premier angle ($\theta_1$);
dans une seconde région (22e) adjacente à la première région (22d), les plans des parties (20h) de réflexion de la lumière sont inclinés de la même manière sous un second angle ($\theta_2$) qui diffère du premier angle ($\theta_1$); et
dans une région proche de la limite entre la première région (22d) et la seconde région (22e), les parties de réflexion de la lumière, dont les plans sont inclinés sous le premier angle et dont les parties de réflexion de la lumière comportent des plans inclinés sous le second angle sont mélangées.

6. Dispositif d'éclairage selon la revendication 1 ou 2, dans lequel
le guide de lumière linéaire (14) est divisé en une pluralité de régions (22f,22g) perpendiculairement à la direction longitudinale; et
dans chaque région divisée, les plans de la pluralité de parties (20k,201) de réflexion de la lumière sont inclinés sous le même angle.

7. Dispositif d'éclairage selon la revendication 1 ou 2, dans lequel
les parties (20i) de réflexion de la lumière s'étendent obliquement par rapport à la direction longitudinale du guide de lumière linéaire (14).

8. Dispositif d'éclairage selon la revendication 1, dans lequel
les plans de la pluralité de parties (20) de réflexion de la lumière sont inclinés respectivement sous lesdits angles différents en fonction des positions dans la direction longitudinale sur la partie (20) de réflexion de la lumière, de sorte que la lumière émise sensiblement à partir du centre de la source de lumière (12a,12b) converge en direction du point d'observation.

9. Dispositif d'éclairage selon l'une quelconque des revendications précédentes, comprenant en outre
un guide de lumière planar (16) couplé optiquement au guide de lumière linéaire, pour amener la lumière qui pénètre à partir du guide de lumière linéaire (14), à sortir dans un plan.

10. Dispositif d'éclairage selon l'une quelconque des revendications précédentes, dans lequel
le côté de réflexion du guide de lumière linéaire (14a) est courbe.

11. Dispositif d'éclairage selon l'une quelconque des revendications précédentes, dans lequel
la largeur d'un plan des parties (20m,20n) de réflexion de la lumière et la largeur de l'autre plan des parties de réflexion de la lumière diffèrent l'une de l'autre.

12. Dispositif d'éclairage selon l'une quelconque des revendications précédentes, dans lequel
un revêtement réfléchissant (18) est en outre formé sur le côté de réflexion du guide de lumière linéaire (14).

**13.** Dispositif d'éclairage selon l'une quelconque des revendications 1 à 13, comprenant en outre des moyens réfléchissants (24) prévus sur le côté de réflexion du guide de lumière linéaire (14), séparément du guide de lumière linéaire (14).

**14.** Dispositif d'éclairage selon l'une quelconque des revendications précédentes, dans lequel le guide de lumière linéaire (14) est réalisé sensiblement sous la forme d'une tige de section carrée.

**15.** Dispositif d'affichage à cristal liquide comprenant un dispositif d'éclairage (10) et un panneau d'affichage à cristal liquide (26,28) éclairé par le dispositif d'éclairage, le dispositif d'éclairage comprenant une source de lumière (12a, 12b) pour émettre une lumière, et un guide de lumière linéaire (14), comportant un côté de réflexion et un côté de sortie qui se font face et s'étendant dans une direction longitudinale, et des extrémités transversales par rapport à la direction longitudinale, la source de lumière étant agencée de telle sorte que la lumière émise par la source de lumière (12a,12b) est introduite dans le guide de lumière linéaire (14) par une extrémité du guide de lumière linéaire, le guide de lumière linéaire de réflexion de la lumière qui rencontre une pluralité de parties (20) de réflexion de la lumière, formées sur un côté de réflexion, et amenant la lumière à sortir linéairement par le côté sortie, **caractérisé par** :

des plans de la pluralité de parties de réflexion de la lumière étant respectivement inclinés sous des angles différents en fonction des positions dans la direction longitudinale des parties de réflexion de la lumière de sorte que la lumière sortante converge en direction d'un point d'observation.

## FIG. 1A

## FIG. 1B

# FIG. 2A

# FIG. 2B

# FIG. 3

# FIG. 4

FIG. 5

# FIG. 6

# FIG. 7

# FIG. 8

EYES

350mm

16

35mm

## FIG. 9

# FIG. 10

$\theta_{(n)}$    $\theta_{(n)}$

$\Delta L$   20c   20c   L

12a   $\theta_{OUT(n)}=0$ DEGREES   $\theta_{OUT(n)}=0$ DEGREES   14   12b

t

# FIG. 11

# FIG. 12

# FIG. 13

# FIG. 14

LIGHT INTENSITY

− (LEFT END)     0 (CENTER)     + (RIGHT END)

POSITION

# FIG. 15

# FIG. 16

# FIG. 17

# FIG. 18

# FIG. 19

# FIG. 20

14

12b

20i

12a

# FIG. 21

FIG. 22

FIG. 23

# FIG. 24

FIG. 25

# FIG. 26

FIG. 27

EP 1 288 702 B1

FIG. 28A

FIG. 28B

48

# FIG. 29

FIG. 30A

120

112b

114

112a

FIG. 30B

120

112a

118

114

# FIG. 31

EYES

−3 DEGREES

+3 DEGREES

108

110

# FIG. 32

# FIG. 33